Europäisches Patentamt

European Patent Office

Office européen des brevets

(19)

(11) Numéro de publication: **0 210 882 B1**

# FASCICULE DE BREVET EUROPEEN

(12)

(45) Date de publication du fascicule du brevet:
08.02.89

(51) Int. Cl.⁴: **B 23 K 11/32**

(21) Numéro de dépôt: 86401288.5

(22) Date de dépôt: 13.06.86

(54) Tête automatique de soudage, notamment pour écrous à protubérances.

(30) Priorité: 23.07.85 FR 8511219

(43) Date de publication de la demande:
04.02.87 Bulletin 87/6

(45) Mention de la délivrance du brevet:
08.02.89 Bulletin 89/6

(84) Etats contractants désignés:
DE GB IT NL SE

(56) Documents cités:
GB-A- 656 620
GB-A- 781 096
US-A- 2 685 018
US-A- 3 854 027

(73) Titulaire: REGIE NATIONALE DES USINES RENAULT,
Boîte postale 103 8-10 avenue Emile Zola,
F-92109 Boulogne-Billancourt (FR)

(72) Inventeur: Brigout, Daniel, 3, Allée des Saules,
F-91370 Verrières le Buisson (FR)
Inventeur: Grigy, Alain, 15, rue Jules Guesde,
F-92300 Levallois Perret (FR)

## Description

La présente invention se rapporte à une tête automatique de soudage connue dant l'art antérieur et telle que décrite dans le préambule de la revendication 1 et destinée au soudage d'écrous à protubérances.

Elle a pour but de proposer une tête de soudage le plus compacte possible qui permette notamment:

— de souder un écrou à protubérances dans toutes les positions, par exemple au plafond;

— de se dispenser d'un centreur d'écrous pour positionner un écrou, ce qui élimine les phénomènes d'arcs entre le centreur et l'écrou lors de la soudure, et

— de conserver l'orientation de cet écrou.

A cet effet, elle a pour objet une tête automatique de soudage du type comprenant un piston solidaire d'un coulisseau de machine à souder qui coopère avec un cylindre susceptible de venir en appui sur une pièce sur laquelle un écrou à protubérances doit être soudé, et une goulotte d'alimentation en écrous, solidaire de ce cylindre.

Suivant une particularité essentielle de l'invention, ce piston comporte notamment une électrode axiale susceptible de s'appuyer sur cet écrou par l'intermédiaire d'une mise de soudage amovible, et une came intermédiaire isolante, solidaire de cette électrode.

Suivant une autre particularité essentielle, ce piston coulisse, à l'encontre d'un ressort de rappel, à l'intérieur de ce cylindre qui renferme une pince de recentrage et de maintien d'écrou dont les branches articulées sont susceptibles d'être resserrées ou écartées par la came intermédiaire lors des déplacements de l'électrode.

Suivant une autre particularité, cette came intermédiaire et une bague isolent électriquement la partie extérieure du piston en contact avec le cylindre, de la partie intérieure constituée par l'électrode creuse et son circuit interne de refroidissement.

Suivant une autre particularité, le cylindre comporte:

— un fourreau cylindrique;

— une pince à deux branches articulées, montée dans la partie inférieure de ce fourreau;

— une goulotte d'alimentation en écrous, fixée à la partie inférieure de ce fourreau au niveau des branches, et pourvue de doigts antirebondissement, et

— un tube intérieur cylindrique, emmanché en butée dans le fourreau, dans lequel coulisse le piston, et sur lequel s'appuie ce ressort de rappel.

Ces particularités permettent l'obtention d'une tête de soudage automatique très compacte et relativement simple qui convient parfaitement au soudage d'écrous à protubérances en toute position, sans centreur d'écrous et avec la même orientation d'écrou.

D'autres particularités et avantages de l'invention apparaîtront plus clairement à la lecture de la description qui suit d'un mode de réalisation préféré, donné à titre d'exemple en référence aux dessins annexés dans lesquels:

— la figure 1 est une vue en coupe longitudinale et axiale d'une tête automatique de soudage conforme à l'invention, en position haute;

— la figure 2 est une vue analogue à celle de la figure 1, avec cette tête de soudage en position basse;

— la figure 3 est une vue analogue à celle de la figure 1, avec un décalage angulaire axial de 90° pour montrer la goulotte d'alimentation en écrous de cette tête de soudage;

— la figure 4 est une vue en coupe transversale suivant 4-4 de la tête de soudage représentée à la figure 1;

— la figure 5 est une vue de dessus de la tête de soudage représentée à la figure 1 ou 2;

— la figure 6 est une vue en coupe transversale suivant 6-6 de la tête de soudage représentée à la figure 3, et

— la figure 7 est une vue de dessus partielle de la partie inférieure de la tête de soudage représentée à la figure 6.

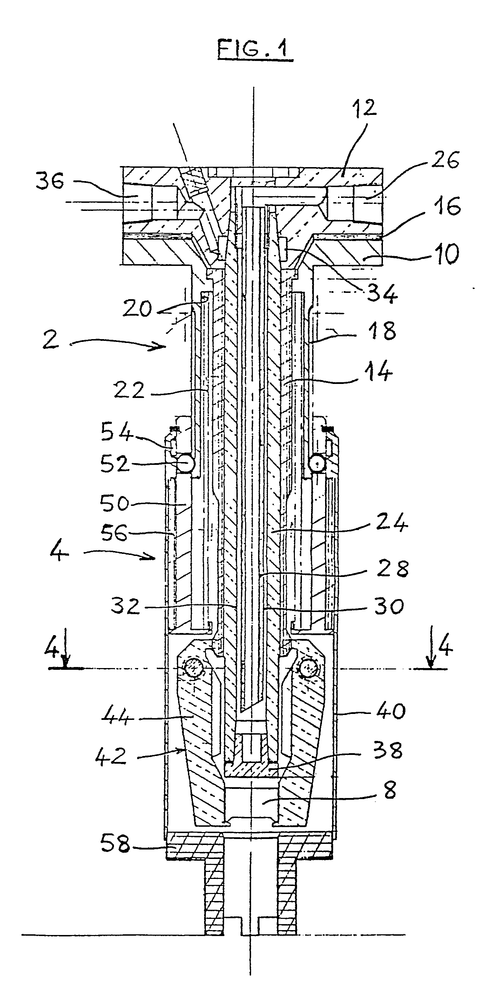

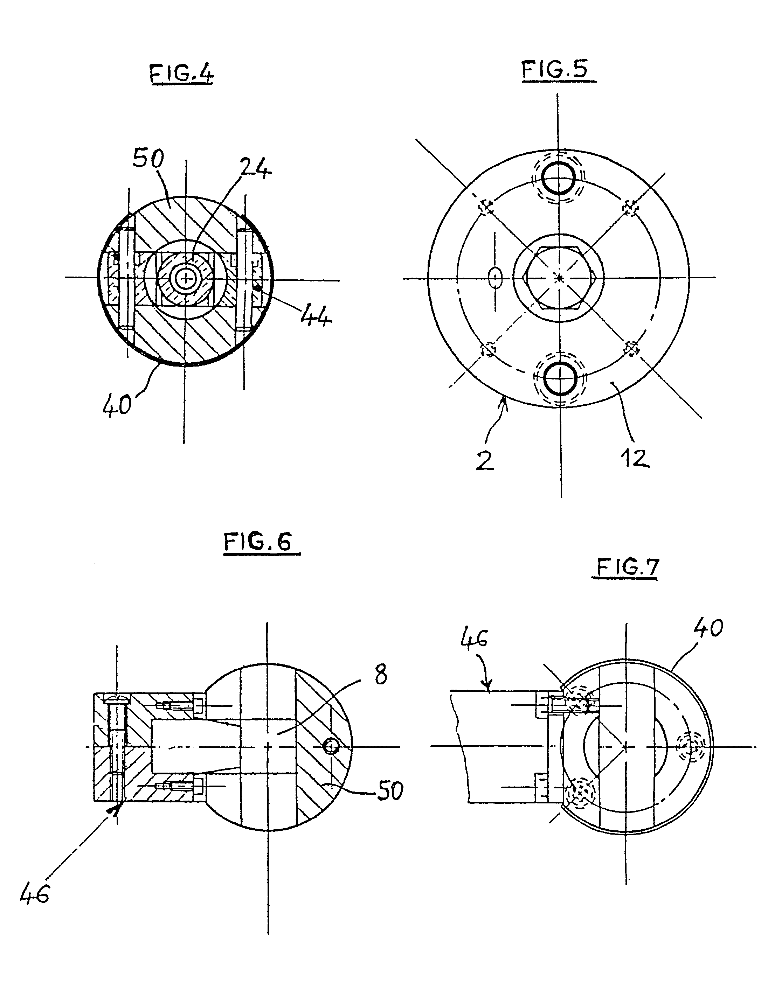

Conformément à l'invention, les figures 1 à 7 représentent une tête automatique de soudage qui présente un piston 2 solidaire d'un coulisseau non représenté de machine à souder, et un cylindre 4. Cette tête est destinée à souder, sur une pièce 6 telle qu'un renfort de baudrier couramment utilisé dans l'industrie automobile, un écrou à protubérances 8.

Le piston 2 comporte globalement une partie extérieure 10 en contact avec le cylindre 4, et une partie intérieure 12 qui est électriquement isolée de celle-ci par une came intermédiaire 14 et une bague 16.

Cette partie extérieure 10 présente sur sa périphérie des rainures de guidage 18 et un alésage 20 pour loger la partie intérieure 12 et un ressort de rappel 22.

Cette partie intérieure 12 comporte de façon coaxiale, une électrode axiale 24 creuse que la came intermédiaire 14 enrobe de façon solidaire.

L'électrode 24 possède un circuit interne de refroidissement qui comprend successivement une entrée 26 d'eau sous pression, un conduit tubulaire axial 28 interne à extrémité biseautée, un passage annulaire 30 formé entre ce conduit et un alésage axial 32 de l'électrode, un chambrage 34 et une sortie 36 d'eau sous pression.

Une mise de soudage amovible 38 est montée à l'extrémité inférieure de l'électrode creuse 24, au-dessous du conduit tubulaire 28.

Le piston 2 coulisse à l'encontre du ressort de rappel 22, à l'intérieur du cylindre 4.

Ce cylindre 4 comporte essentiellement:

— un fourreau cylindrique 40;

— une pince 42 à deux branches articulées 44, montée dans la partie inférieure de ce fourreau, de manière à recentrer et à maintenir l'écrou à protubérances 8 en position;

— une goulotte 46 d'alimentation en écrous, fixée à la partie inférieure de ce fourreau, au niveau des branches 44, et pourvue de doigts antirebondissement 48, et

— un tube intérieur cylindrique 50 emmanché en butée dans le fourreau 40, dans lequel coulisse le piston 2, et sur lequel s'appuie le ressort de rappel 22.

Ce tube intérieur 50 renferme des billes 52 destinées à coopérer avec les rainures de guidage 18 du piston 2.

Un chambrage 54 est prévu dans le fourreau cylindrique 40 en vue d'un démontage rapide du cylindre 4 par coulissement de ce fourreau sur le tube intérieur 50, à l'encontre d'un ressort de rappel 56. Ce démontage facilite grandement le remplacement de la mise de soudage 38.

Le fourreau cylindrique 40 s'appuie sur la pièce 6 par l'intermédiaire d'une entretoise d'extrémité 58 spécifique aux dimensions de l'écrou à protubérances 8 et à la forme de cette pièce.

La tête de soudage précédemment décrite fonctionne selon un cycle de fonctionnement suivant:

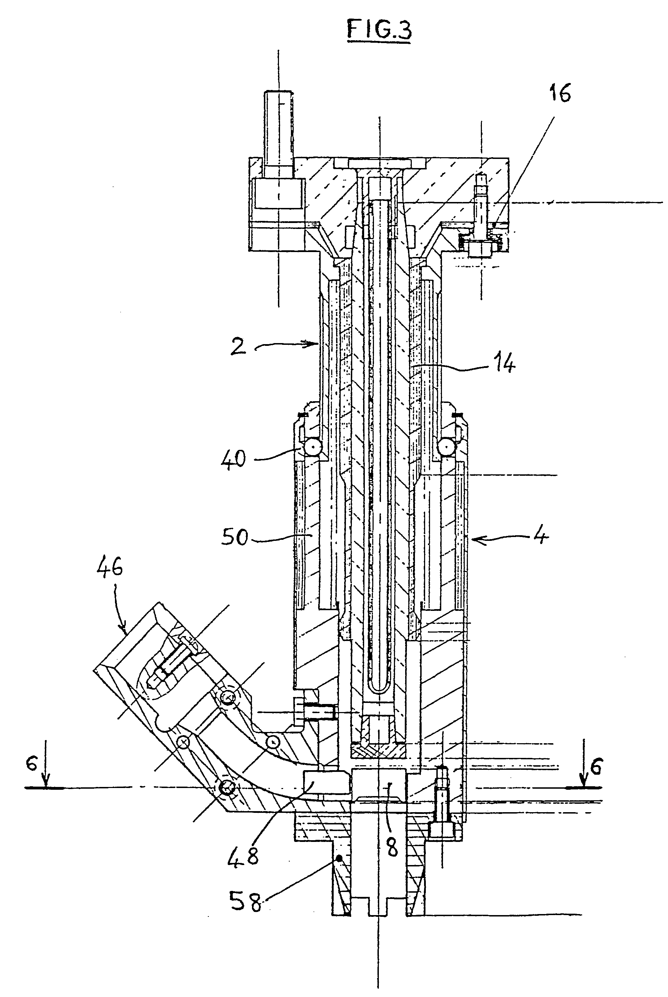

— La tête de soudage se trouve en position haute au départ du cycle (figure 1). Un écrou à protubérances 8 est soufflé et positionné dans cette tête après avoir parcouru la goulotte d'alimentation 46 sans rebondir grâce aux doigts 48 (figure 3).

Les branches 44 de la pince 42 sont verrouillées en position fermée par la came intermédiaire 14.

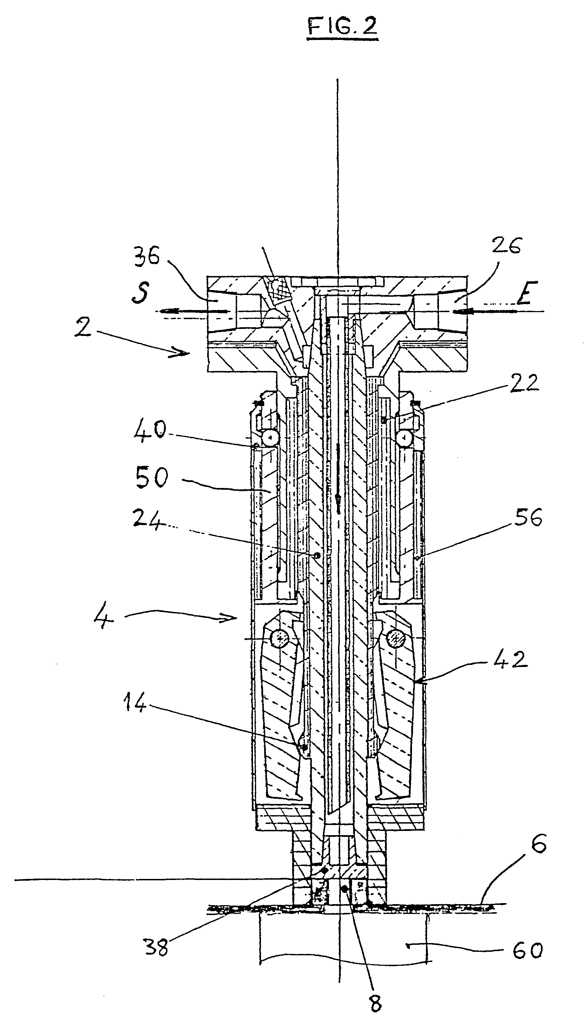

— La descente du coulisseau non représenté de la machine à souder pousse la tête de soudage contre le renfort de baudrier 6; le cylindre 4 est immobilisé alors que le piston 2 continue de descendre (figure 2) grâce au ressort de rappel 22.

Le piston 2 déverrouille les branches 44 par l'intermédiaire de la came 14. Cette came écarte ces branches pour éviter les phénomènes perturbateurs d'arcs.

L'électrode 24 pousse l'écrou 8 contre le renfort de baudrier 6 et une contre-électrode 60 (figure 2).

— L'écrou 8 est alors soudé.

Le piston 2 remonte, puis le cylindre 4. Un nouvel écrou 8 est introduit par soufflage dans cette tête de soudage au cours de la remontée de celle-ci d'une hauteur nécessaire au dégagement du renfort de baudrier 6.

**Revendications**

1. Tête automatique de soudage, pour écrous à protubérances (8), du type comprenant un piston (2) solidaire d'un coulisseau de machine à souder qui coopère avec un cylindre (4) susceptible de venir en appui sur une pièce (6) sur laquelle un écrou à protubérances (8) doit être soudé, et une goulotte (46) d'alimentation en écrous, solidaire de ce cylindre, caractérisée en ce que:
   — le piston (2) comporte une électrode axiale (24) susceptible de s'appuyer sur l'écrou (8) par l'intermédiaire d'une mise de soudage amovible (38), et une came intermédiaire isolante (14) solidaire de cette électrode, d'une part;
   — ce piston (2) coulisse à l'encontre d'un ressort de rappel (22), à l'intérieur de ce cylindre (4) qui renferme une pince (42) de recentrage et de maintien d'écrou dont les branches articulées (44) sont susceptibles d'être resserrées ou écartées par la came intermédiaire (14) lors des déplacements de l'électrode (24), d'autre part.

2. Tête automatique de soudage suivant la revendication 1, caractérisée en ce que la came intermédiaire (14) et une bague (16) isolent électriquement la partie extérieure (10) du piston en contact avec le cylindre (4), de la partie intérieure (12) constituée par l'électrode creuse (24) et son circuit interne de refroidissement.

3. Tête automatique de soudage suivant la revendication 2, caractérisée en ce que le circuit de refroidissement de l'électrode (12) comporte successivement une entrée (26) d'eau sous pression, un conduit tubulaire axial (28) interne qui présente une extrémité biseautée juste au-dessus de la mise de soudage (38), un passage annulaire (30) formé entre ce conduit tubulaire et un alésage axial (32) de l'électrode, un chambrage (34) et une sortie (36) d'eau sous pression.

4. Tête automatique de soudage suivant l'une quelconque des revendications 1, 2 et 3, caractérisée en ce que le cylindre (4) comporte:
   — un fourreau cylindrique (40);
   — une pince (42) à deux branches articulées (44), montée dans la partie inférieure de ce fourreau;
   — une goulotte (46) d'alimentation en écrous, fixée à la partie inférieure de ce fourreau, au niveau des branches (44), et pourvue de doigts anti-rebondissement (48), et
   — un tube intérieur cylindrique (50) emmanché en butée dans le fourreau (40), dans lequel coulisse le piston (2), et sur lequel s'appuie le ressort de rappel (22).

5. Tête automatique de soudage suivant l'une quelconque des revendications 1 à 4, caractérisée en ce que la partie extérieure (10) du piston (2) présente des rainures de guidage (18) destinées à coopérer avec des billes (52) logées dans le tube intérieur (50) du cylindre (4), ainsi qu'un alésage (20) pour loger le ressort de rappel (22) et la partie intérieure (12) du piston.

6. Tête automatique de soudage suivant la revendication 4 ou 5, caractérisée en ce que les billes (52) sont susceptibles de coopérer avec un chambrage (54) du fourreau cylindrique (40) par coulissement de celui-ci sur le tube intérieur (50) à l'encontre d'un ressort de rappel (56), en vue d'un démontage rapide du cylindre (4) pour changer la mise de soudage (38).

7. Tête automatique de soudage suivant l'une quelconque des revendications 1 à 6, caractérisée en ce que le fourreau cylindrique (40) s'appuie sur la pièce (6) par l'intermédiaire d'une entretoise d'extrémité (58) spécifique aux dimensions de l'écrou à protubérances (8) et à la forme de cette pièce.

**Patentansprüche**

1. Automatischer Schweisskopf für höckerförmige Schraubenmuttern, mit einem Kolben (2), der fest mit einer Führungsbacke der Schweissmaschine verbunden ist, die mit einem Zylinder (4) zusammenwirkt, welcher sich auf einem Teil (6) abstützen kann, auf das eine höckerförmige Schraubenmutter (8) geschweisst werden soll und mit einem Stutzen (46) zur Mutternzufuhr, der mit dem Zylinder fest verbunden ist, dadurch gekennzeichnet, dass

— der Kolben (2) eine axiale Elektrode (24) aufweist, die sich auf der Mutter (8) abstützen kann über eine auswechselbare Schweissführung (38) und einen isolierenden Zwischennocken (14), der mit dieser Elektrode verbunden ist, und

— dass der Kolben (2) gegen die Wirkung einer Rückholfeder (22) verschiebbar ist ins Innere des Zylinders (4), der eine Klammer (42) zum Zentrieren und zum Halten der Mutter umschliesst, und dessen angelenkte Arme (44) durch den Zwischennocken (14) während des Verschiebens der Elektrode (24) geschlossen oder gelöst werden können.

2. Automatischer Schweisskopf nach Anspruch 1, dadurch gekennzeichnet, dass der Zwischennocken (14) und ein Ring (16) denjenigen Aussenabschnitt (10) des Kolbens elektrisch isolieren, der mit dem Zylinder (4) in Berührung steht, vom Innenabschnitt (12), bestehend aus der hohlen Elektrode (24) und deren inneren Kühlkreis.

3. Automatischer Schweisskopf nach Anspruch 2, dadurch gekennzeichnet, dass der Kühlkreis der Elektrode (12) nacheinander einen Einlass (26) für Druckwasser aufweist, einen inneren Axialkanal (28) mit einem abgeschrägten Ende gerade oberhalb der Schweissführung (38), einen ringförmigen Durchlass (30) zwischen dem inneren Kanal und einer Axialbohrung (32) der Elektrode, eine Senkung (34) und einen Auslass (36) für das Druckwasser.

4. Automatischer Schweisskopf nach einem der Ansprüche 1, 2 oder 3, dadurch gekennzeichnet, dass der Zylinder (4) aufweist:

— eine zylindrische Hülse (40);

— eine Klammer (42) mit zwei gelenkigen Armen (44), die im Inneren der Hülse angeordnet ist;

— einen Stutzen (46) zur Mutternzufuhr, der am unteren Abschnitt der Hülse auf Höhe der Arme (44) befestigt ist und mit Prallschutzfingern (48) versehen ist, und

— ein inneres zylindrisches Rohr (50), das im Anschlag über die Hülse (40) gestülpt ist, in der Kolben (2) gleitet und auf dem sich die Rückholfeder (22) abstützt.

5. Automatischer Schweisskopf nach einem der Ansprüche 1 bis 4, dadurch gekennzeichnet, dass der äussere Abschnitt (10) des Kolbens (2) Führungsnuten (18) aufweist, die mit Kugeln (52) zusammenwirken, die im Innenrohr (50) des Zylinders (4) gelagert sind und eine Bohrung (20) aufweist zur Aufnahme der Rückholfeder (22) und des Innenabschnitts (12) des Kolbens.

6. Automatischer Schweisskopf nach Anspruch 4 oder 5, dadurch gekennzeichnet, dass die Kugeln (52) mit der Senkung (54) in der zylindrischen Hülse (40) zusammenwirken, so dass letztere auf dem Innenrohr (50) gleitet gegen die Wirkung einer Rückholfeder (56) im Hinblick auf die schnelle Abnahme des Zylinders (4) zum Auswechseln der Schweissführung (38).

7. Automatischer Schweisskopf nach einem der Ansprüche 1 bis 6, dadurch gekennzeichnet, dass die zylindrische Hülse (40) sich auf dem Teil (6) über eine Endhalterung (58) abstützt, die an die Abmessungen der höckerförmigen Muttern (8) angepasst ist sowie an die Form dieses Teils.

## Claims

1. An automatic welding head for protuberance-bearing nuts (8) of the type comprising a piston (2) fixed with respect to a welding machine slider which co-operates with a cylinder (4) capable of coming to bear against a piece (6) to which a protuberance-bearing nut (8) is to be welded, and a nut feed channel (46) which is fixed with respect to said cylinder, characterised in that:

— the piston (2) comprises an axial electrode (24) capable of bearing against the nut (8) by way of a removable welding portion (38), and an intermediate insulating cam (14) which is fixed with respect to said electrode, on the one hand, and

— said piston (2) slides against the force of a return spring (22) within said cylinder (4) which contains a nut holding and recentering gripping device (42) whose pivoted arms (44) are capable of being tightened towards or moved away from each other by the intermediate cam (14) upon displacement of the electrode (24) on the other hand.

2. An automatic welding head according to claim 1, characterised in that the intermediate cam (14) and a ring (16) electrically insulate the outside part (10) of the piston which is in contact with the cylinder (4) from the inside part (12) formed by the hollow electrode (24) and its internal cooling circuit.

3. An automatic welding head according to claim 2, characterised in that the cooling circuit of the electrode (12) successively comprises an intake (26) for water under pressure, an internal axial tubular conduit (28) which has a bevelled end just above the welding portion (38), an annular passage (30) formed between said tubular conduit and an axial bore (32) in the electrode, a recess (34) and an outlet (36) for the pressurised water.

4. An automatic welding head according to any one of claims 1, 2 and 3, characterised in that the cylinder (4) comprises:

— a cylindrical casing (40);

— a gripping device (42) having two pivoted arms (44), which is mounted in the lower part of said casing;

— a nut feed channel (46) which is fixed to the lower part of said casing at the location of the arms (44) and which is provided with antirebound fingers (48), and

— an inside cylindrical tube (50) which is fitted in a position of abutment in the casing (40), in which the piston (2) slides and against which the return spring (22) bears.

5. An automatic welding head according to any one of claims 1 to 4, characterised in that the outside part (10) of the piston (2) has guide grooves (18) intended to co-operate with balls (52) disposed in the internal tube (50) of the cylinder (4) and a bore (20) for housing the return spring (22) and the inside part (12) of the piston.

6. An automatic welding head according to claim 4 or claim 5, characterised in that the balls (52) are capable of co-operating with a recess (54) in the cylindrical casing (40) by sliding movement thereof on the internal tube (50) against the force of a return spring (56) for rapid disassembly of the cylinder (4) for changing the welding portion (38).

7. An automatic welding head according to any one of claims 1 to 6, characterised in that the cylindrical casing (40) bears against the piece (6) by way of an end spacer portion (58) which is specific to the dimensions of the protuberance-bearing nut (8) and to the shape of said piece.

## FIG. 1

## FIG. 2

EP 0 210 882 B1

FIG.3

11

## FIG.4

## FIG.5

## FIG.6

## FIG.7